# EUROPEAN PATENT SPECIFICATION

(11) **EP 1 764 175 B1**
(45) Date of publication and mention of the grant of the patent: **27.02.2013**
(21) Application number: 06120711.4
(22) Date of filing: 14.09.2006
(51) Int. Cl.: B23B 47/28, E04F 21/00, H02G 1/00, H02G 3/08

(54) **Device and method for drilling non circular openings**
Gerät und Verfahren zum Aussägen von nicht kreisförmigen Aufnahmeöffnungen
Appareil et méthode pour forer des ouvertures non cirulaires

(30) Priority: 14.09.2005 SE 0502032
(43) Date of publication of application: 21.03.2007
(73) Proprietor: JIJ Plast AB, 253 73 Helsingborg (SE)
(72) Inventor: Delin, Stina J, 253 73 Gantofta (SE)
(74) Representative: Ström & Gulliksson AB

(56) References cited:
- WO-A1-01/31759
- JP-A- 9 163 546
- JP-A- 2001 161 018
- SE-B- 417 018

## Description

### FIELD OF THE INVENTION

The present invention pertains to a device and a method for locating in buildings the exact position of hidden objects, preferably non-circular boxes for electrical installations which are to be exposed by providing a hole in a covering building unit, preferably a plate-like wall, roof or floor unit, just opposite the object, is provided with a plurality of holes for the object.

### BACKGROUND OF THE INVENTION

In order to locate the position of hidden circular boxes for exposure by providing holes in covering building plates after application thereof on construction frameworks, various locating methods have been used, in order to locate the exact position of the hidden box. An auxiliary device utilized for facilitating a rational installation of a building plate is disclosed in SE-7910517-7, which solves the problem that the exposing hole often was wrongly positioned in relation to the circular box, which implied time-consuming and circumstantial adjustment work. By means of the device described in SE-7910517-7 a circular exposure hole is positioned correctly relative to the circular box. The auxiliary device is having different diameters for boxes with different diameters, wherein a centered guiding hole is always arranged in the centre of the circular box.

However, there exist also boxes, whose form deviates from the completely circular form, e.g. so-called 1½ boxes, double boxes, etc. A problem of the known methods and auxiliary devices is that these only function for making of circular holes. When adjusting to non-circular boxes, a manual post shaping is necessary. This is time consuming and the manual making of holes is not done precise manner and rationally, which leads to longer mounting times and eventually even incorrect holes in the building plate, which in the worst case must be replaced by a new one.

### SUMMARY OF THE INVENTION

The object of the present invention is to eliminate these drawbacks and provide a simple locating device that permits exact location of the hidden object and which may be used for all known types of covering building units without complicating a rational mounting of the covering building unit. Furthermore, the locating device should allow for an automatic making of holes that does not need a manual post shaping for such building units that differ from the completely circular form. This is accomplished according to the invention by means of the locating device having the features as defined in the attached patent claim 1. Further embodiments are defined in the dependent claims. A method of using such a device is having the features of claim 9.

### BRIEF DESCRIPTION OF THE DRAWINGS

The invention will be further described below with reference to the accompanying drawings, in which
Fig. 1 is a perspective view of a prior art device for locating and making of circular holes;
Fig. 2 is a sectional view of the prior art device according to Fig. 1;
Fig. 3 is a plane view of a localization device for a double box having double devices according to Fig. 1;
Fig. 4 shows the manual post shaping after the making of the hole by means of the device according to Fig. 3;
Fig. 5 illustrates the steps of the method according to which the device according to Fig. 3 is used for locating and exposure of a double box;
Fig. 6A shows a coupling element in the form of a locating unit 60 according to an embodiment of the invention in a plane view from above,
Fig. 6B shows an oblique elevation view laterally and from above of the locating unit of Fig. 6A,
Fig. 6C shows the locating unit of Fig. 6A and 6B in a lateral view;
Fig. 7 illustrates the location unit of Fig. 6A to C in a plane view from behind, (A) with cover, (B) with removed cover, and (C) the cover itself (the inside is shown, i.e. the cover is shown upside down compared to (A));
Fig. 8 illustrates the steps of the method according to which the device according to Fig. 6 and 7 is used for localization and exposure of 1 ½ box;
Fig. 9 shows a detailed view of the localization unit according to Fig. 6 and 7;
Fig. 10 shows the localization unit according to Fig. 6, 7 and 9 (A) with a seeker unit and (B) the inside of the localization unit without cover from behind, in order to illustrate the interaction of the magnets;
Fig. 11 shows a perspective view of a step of the method of Fig. 8, wherein the hole saw has made a first hole and exposed a part of the locating unit of Fig. 6, 7 and 9, which is arranged in a box behind a gypsum wall;
Fig. 12 shows a further embodiment of the locating unit for a double box that permits making of holes for the latter without the need for manual post shaping; and

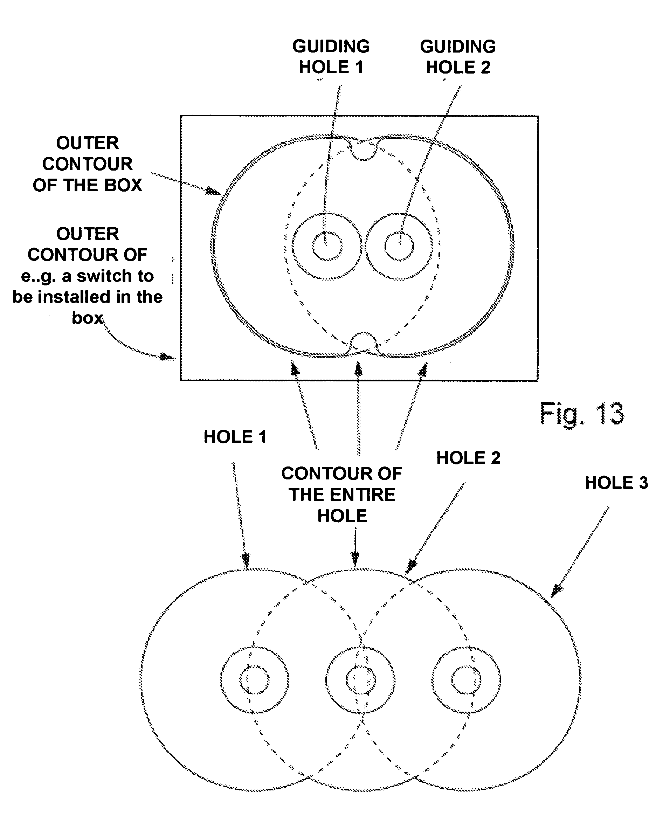

Fig. 13 shows schematically two guiding holes, the outer contour of the entire hole, as well as the outer contours of a box and a switch that is installed in the box, and schematically three overlapping holes and the contour of the aggregate hole.

### DETAILED DESCRIPTION OF EMBODIMENTS OF THE INVENTION

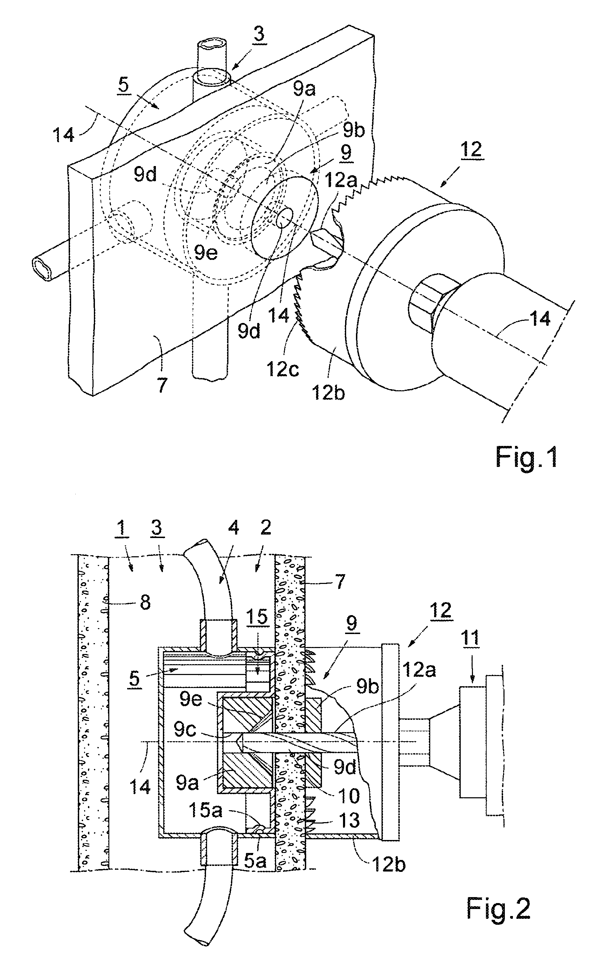

In Fig. 1 and Fig. 2 a wall arrangement 1 is illustrated, comprising a frame-work structure 2 and an electrical installation 3 including wires 4, wherein only one of these wires is partly shown with dashed and dotted lines, and circular boxes 5 for the wires 4. The electrical installation 3 is mounted on the face sides of the frame-work structure 2 and after finishing the installation, the frame-work structure 2 is provided with plate-like wall elements 7.

In order to locate the exact position of the box 5 from the outside by simple means, irrespective of the hardness of the plate-like wall element 7 and without affecting the possibilities of rational mounting of the wall element 7, the localization is obtained by means of a locating magnet 9, comprising a first magnetic body 9a which is mounted in the object 5 on one side of the building unit, such as the wall element 7, covering the object, and a second magnetic body 9b which is movable along the other side of the covering building unit for sensing the position of the first magnetic body mounted in the object.

This locating device permits fastening of the plate-like wall element 7 without regard to subsequent hole making, and when the element is secured in a rational way by a method known per se, the magnetic body 9b is moved along the outside thereof until one of the magnetic bodies attracts the other or both magnetic bodies attract each other.

The properties of the magnetic bodies 9a, 9b have the effect that the magnetic body 9b tries to position itself just opposite the magnetic body 9a, and with opposite poles directed towards each other. Accordingly, it becomes possible to rapidly and exactly locate the magnetic body 9a and thereby the exact position of the box 5 behind the plate-like wall element 7. When the position of the box 5 is exactly located, the information obtained is used in that a hole is drilled through the plate-like wall element 7 opposite the box 5 by means of a drilling machine 11 with a box drill device 12 comprising a central twist drill 12a and a drill sleeve 12b with a side cutting edge 12c. The box drill device 12, which in certain cases also is called a hole saw or box cutter, is placed against the plate-like wall element on the point determined by means of the locating magnet 9, and thereafter drilling of a central hole 10 is made, whereupon the drill sleeve 12b cuts out a circular hole 13, which substantially is of the same size as the box 5 for exposure thereof.

The magnetic bodies 9a, 9b are provided with holes 9c and 9d, respectively, for guiding the twist drill 12a of the box drill device 12. While the magnetic body 9b has a hole 9d, it may, after locating the box 5, remain in the position on the plate-like wall element 7 determined by the magnetic field. The hole 9d of the magnetic body 9b may then be used directly for setting and guiding the twist drill 12a, whereby no marks need to be put on the wall element for setting the box drill device 12. Alternatively the locating magnet 9 is provided with a marking unit instead of hole 9d. An example for such a marking unit is a stamp that may be pressed against wall element 7 in order to mark the position at which the drill 12a is to be positioned for the making of the hole, when the position of the box 5 is precisely located by means of the magnetic bodies 9a and 9b according to the above.

An especially suitable embodiment of the locating magnet 9 is obtained by providing the magnetic body 9a with a preferably conically tapering recess 9e for guiding the box 5 so that the twist drill 12a enters into the central hole 9c if the twist drill 12a deflects from the center line 14 of the box 5 and magnetic body 9a. Therefore the box 5 may be moved slightly so that the twist drill 12a may be guided correctly before the drill sleeve 12b starts to drill the exposure hole 13 for the box 5 in the plate-like wall element 7.

The mounted magnetic body 9a comprises or is preferably included in a coupling means 15 which is securable to the box 5 and releasable therefrom after exposure thereof, such that all parts of the locating magnet 9 may be released for exposure of the interior of the box 5 and used at another site. The coupling means 15 and the box 5 preferably have lock fitting portions 15a, 5a for locking the coupling means by insertion thereof into the box. Furthermore, the coupling means 15 preferably comprises a cap provided with the magnetic body 9a.

The localization work is facilitated and may be conducted with great exactness while both the magnetic bodies 9a, 9b are annular in shape and with substantially the same outer diameter and central-hole diameter. In order to obtain a strong magnetic field which without difficulties permits safe securing of the magnetic body 9a in its position on the outside of the wall element 7 after locating the box 5, both magnetic bodies 9a, 9b have such magnetic properties that each generates a magnetic field, which means strong attraction when the fields coincide.

In such a manner it is by simple means possible to locate the exact position of e.g. a hidden box 5 such that the exposing hole 13 is positioned relative to the box 5. Thus it is possible to completely cover the exposing hole 13 with the contact member (not shown) belonging to the box 5. This contact member has a rear portion which engages the box and a front portion which provides a cap engaging the outside of the wall element 7. While the box 5, exposing hole 13, and the contact member are centered in relation to each other, this cap covers the exposing hole 13 and no repair of non-covered portions of the hole is required.

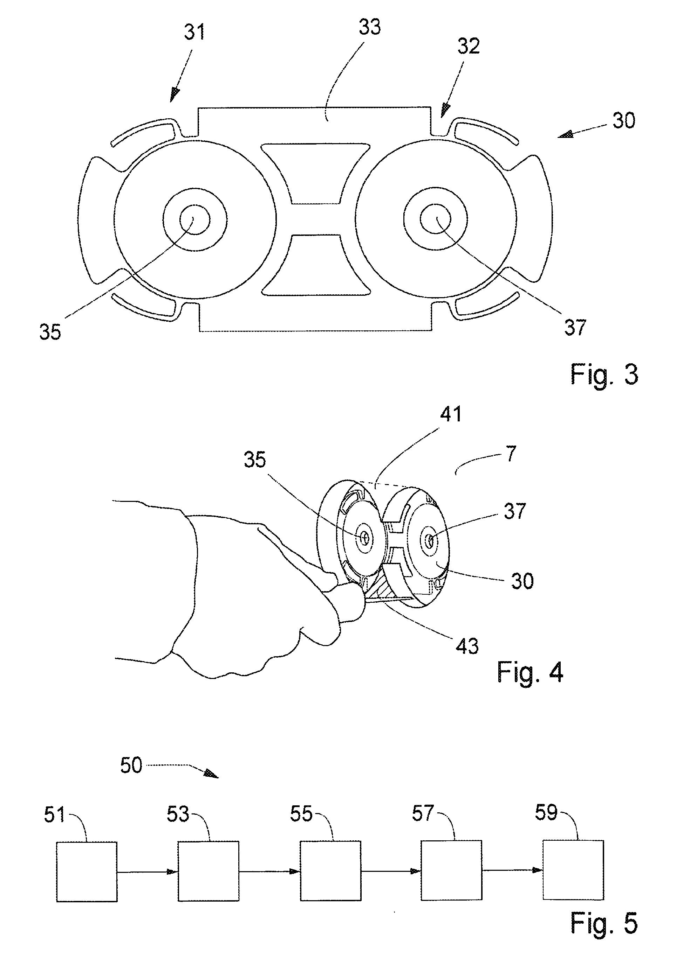

In Fig. 3 a locating device 30 is illustrated, which comprises a combination of two separate locating devices 31, 32 being arranged in a common housing 33, wherein the locating device comprises two sets of elements as described above with reference to Fig. 1 and Fig. 2, such as centering holes 35, 37 etc. This arrangement in a common housing 33 facilitates a localization of, and making of holes for, a so called double box in a wall element 7. The double box is having an elongated housing with semicircular ends, and the locating device 30 is adapted to be inserted into such a double box. The localization of the double box and the making of holes is done according to the steps illustrated in Fig. 4 and 5. Firstly, the locating device 30 is introduced into the double box (step 51 of method 50). Subsequently the wall element 7 is mounted, e.g. a gypsum plate or a panelling board (Step 53). The first section 31 of locating device 30 is then located according to the method described above, namely by searching the inserted element, for instance by means of the above describe locating magnet 9, and the center bore 35 is marked on wall element 7, and a circular hole is drilled by means of the hole saw (step 55). Then the procedure is repeated with the second section 32 of locating device 30 by locating the second section 32 and by drilling a suitable circular hole around its center bore 37 (step 57). As becomes evident from Fig. 4, between the two holes there still remain sections 41, 43 of wall element 7, which have to be manually removed in order to reach the double box and to be able to remove the locating device 30 from the double box through wall element 7. This working moment is illustrated in Fig. 4, where sections 41, 43 are cut away with a knife (step 59). Subsequently the locating device 30 may be picked out and the working moment is carried out.

The manual after treatment of the hole for the double box that is necessary is both time consuming and not exact, which leads to longer installation times, and eventually incorrect holes in the building plate, which in the worst case has to be replaced by a new one. There is a need for improving the rationality of the method.

Below different embodiments of the invention are described, including devices in accordance with the invention in order to further increase the rationality of the above described method. Devices of the embodiments make it possible to control the localization and particularly the making of holes for non-circular boxes. In this connection the same tool for making of holes for circular boxes may be used, such as the above described hole saw. In this manner locating and making of holes for different types of boxes is facilitated during one and the same working moment when one or several wall elements are positioned in front of such boxes. The same searching toll may be used for locating and the same hole making tool may be used for the making of holes for different types of boxes.

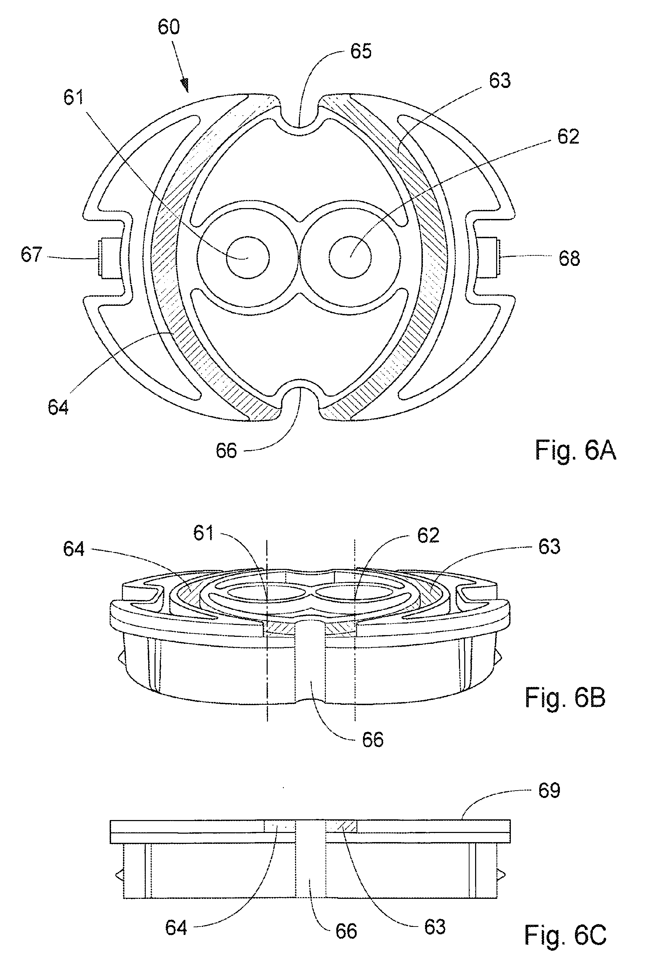

Fig. 6A shows a coupling element in the form of a locating unit 60 according to an embodiment of the invention in a plane view from above.

The locating unit 60 is having a first guiding hole or bore 61as well as a second guiding hole or bore 62, and round recesses or grooves 63, 64, which are arranged concentrically with relation to guiding hole 61 or 62, respectively, as well as recesses 65, 66 and snap locking elements 67, 68. The guiding holes 61, 62 are adapted to receive a central twist drill of a hole making tool, such as a hole saw, in accordance with the above described center holes. The guide holes are arranged separate from magnetic bodies for locating a guide hole, and are preferably formed as inlay bushings of metal, such as aluminum. The remainder of the device, except the magnetic bodies are preferably made of plastic material. The round recess 63, which has the shape of a part of a circle and a defined depth from the top surface 69 of the locating device (see Fig. 6C), is adapted to receive the toothed cutting side of the hole saw when it has advanced through the wall. Thus, the recess 63 ensures that hole saw does not cut into the upper side of the locating device 60. One does simply manage to stop the hole saw when it has advanced through wall element 7, for instance a gypsum wall. Hence the recess 63 provides a safety margin because the hole saw does not engage with an element of locating device 60 that is positioned directly adjacent the inner side of wall 7. In the same manner, recess 64 ensures that the hole saw does not cut into the upper surface of locating device 60 when the central twist drill is guided in guiding hole 63, which will be explained below.

Recesses 65, 66 are adaptations to specific designs of a 1½ box, such that the locating device easily is inserteable into the latter. These recesses may also be positioned at other suitable positions, or even be omitted, depending on the corresponding design of the box.

The snap locking elements 67, 68 are adapted to temporarily hold the locating device 60 in the box. The snap locking elements 67, 68 are formed as resilient clamps, which engage behind an outside edge of the box. In this manner the locating device 60 is positioned stably in the box when it is introduced into the latter. In order to remove the locating device 60 out of the box, the snap locking elements 67, 68 may be moved away from the engagement with the outer edge of the box in a suitable way, such that it may be removed from the box after the making of a hole is terminated.

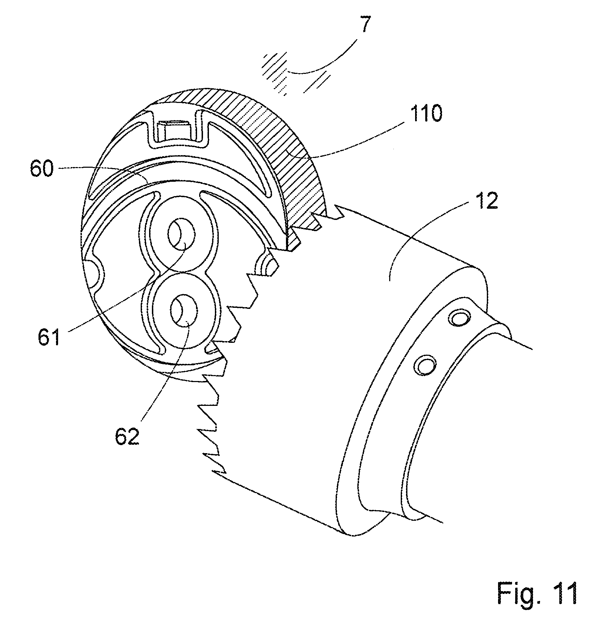

In the interior of locating element 60 further elements are present, as is illustrated in the following drawings, and which will be explained in more detail below. For instance, there are locating magnets. It is easily understandable that the positioning of guiding holes 61, 62 with respect to each other does not provide the possibility of using a circular locating magnet, such as known from the prior art, because the guiding holes are in the way for such a magnet. The guiding hole 62 is furthermore positioned within the radius of the cutting tool of the hole saw, i.e. within groove 63. Hence, the guiding hole 62 is exposed after having drilled through wall element with the hole saw and when the corresponding element that is sawed out is removed after making the first hole, for which the guiding hole 61 is used. When in this manner the second guiding hole 62 is accessible (and of course the first guiding hole 61), this may be used for making a second hole, partially overlapping with the hole that has already been made in the wall 7. The hole 110 resulting from making the first hole is shown in Fig. 11. Fig. 6B shows an oblique elevation view laterally and from above of the locating unit of Fig. 6A, and Fig. 6C shows the locating unit of Fig. 6A and 6B in a lateral view, in order to further elucidate the design of locating device 60.

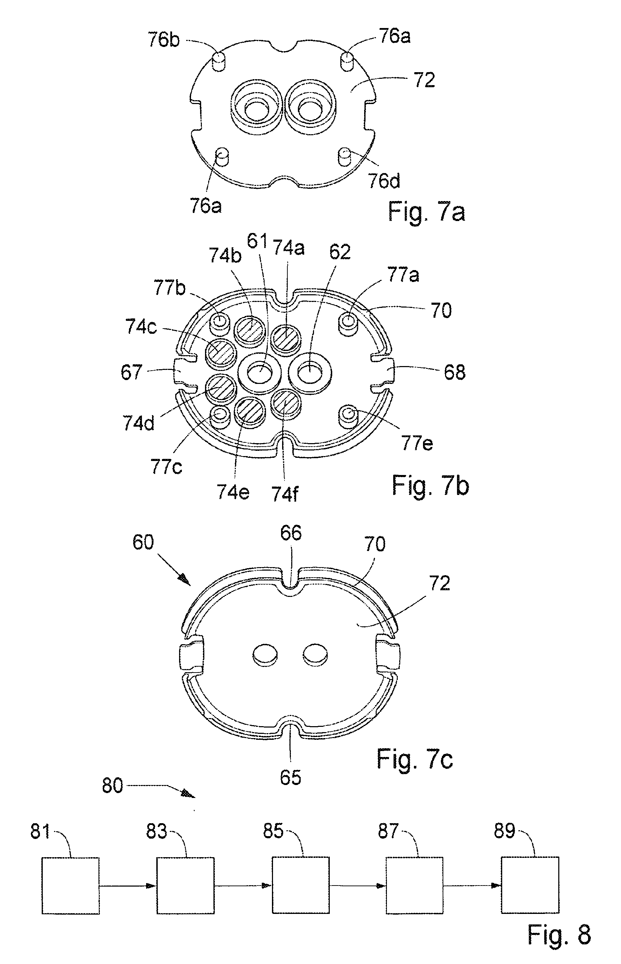

Fig. 7 illustrates the location unit of Fig. 6A to C in a plane view from behind, (A) with cover, (B) with removed cover, and (C) the cover itself (the inside is shown, i.e. the cover is shown upside down compared to (A)). The locating element 60 is assembled of a first, upper part 70, and a cover 72 on the rear side. The cover 72 is having openings for the guide holes 61, 62. On the inside of cover 72, pins 76a, 76b, 76c, 76d are located, which, when the cover 72 is assembled in the rear side of top part 70, engage with corresponding hollow elements 77a, 77b, 77c, 77d receiving the pins 76a, 76b, 76c, 76d and locking these by means of friction therein. A number of guiding magnets 74a, 74b, 74c, 74d, 74e, 74f are arranged in the interior of the top part. These guiding magnets 74a-f are round bar magnets and are each inserted in a cavity, respectively, in the interior of the top part 70, wherein the guiding magnets preferably are introduced into these cavities by means of press fitting. The cover 72 ensures that each of the guiding magnets are retained in its cavity, respectively. As is illustrated in the Figs., the guiding magnets are arranged in a circle around the guide hole 61. However, the circle is not completely closed because the other guide hole does prevent this. Therefore a ring magnet cannot be used. Nevertheless, the positioning of the bar formed guiding magnets 74a-f makes it possible to provide a precise localization of the guide hole 61 by means of a search magnet, as has been described above. The other guiding hole 62 does not have to be located through the wall when it is hidden by wall element 7 as the hole 62 will be accessible when the guiding hole 61 has been used for making a first hole.

Fig. 8 illustrates the steps of the method according to which the device according to Fig. 6 and 7 is used for localization and exposure of 1 ½ box. The method 80 comprises the following steps:
step 81: positioning the locating element (box insert) 60 in the box;
step 83: installing the wall element;
step 85: searching with search unit 100;
step 87: making the first hole 110 with hole saw 12, wherein the first guiding hole 61 is used;
step 89: when the first hole is made (Fig. 11), the drill is moved to the other, now visible guiding hole 62, and repeating making a hole with hole saw 12.

Now the locating device 60 may be removed from the box and the working moment is terminated.

There is no need for a manual post shaping of the combined hole as the contour thereof preferably is positioned outside of the outer border contour of the box, but within the contour of a element that subsequently is installed in the box and which hides the box, for instance a switch. In other words no part of the wall element lies inside of the boxes outer contour, such that the entire box is easily accessible for introduction of installation elements and for removing the locating device.

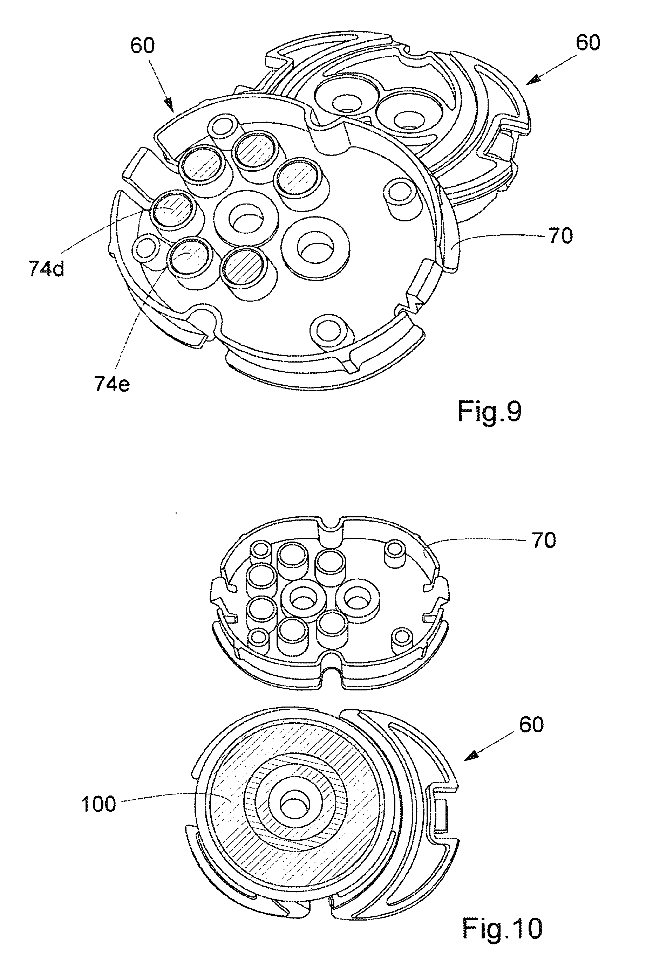

Fig. 9 shows a detailed view of the localization unit 60 according to Fig. 6 and 7 in order to further elucidate its design. Fig. 10 shows the localization unit according to Fig. 6, 7 and 9 (A) with a seeker unit and (B) the inside of the localization unit without cover from behind, in order to illustrate the interaction of the magnets during the searching phase, step 85. Fig. 11 shows a perspective view of a step of the method of Fig. 8, wherein the hole saw 12 has made a first hole and exposed a part of the locating unit of Fig. 6, 7 and 9, which is arranged in a box behind a gypsum wall 7.

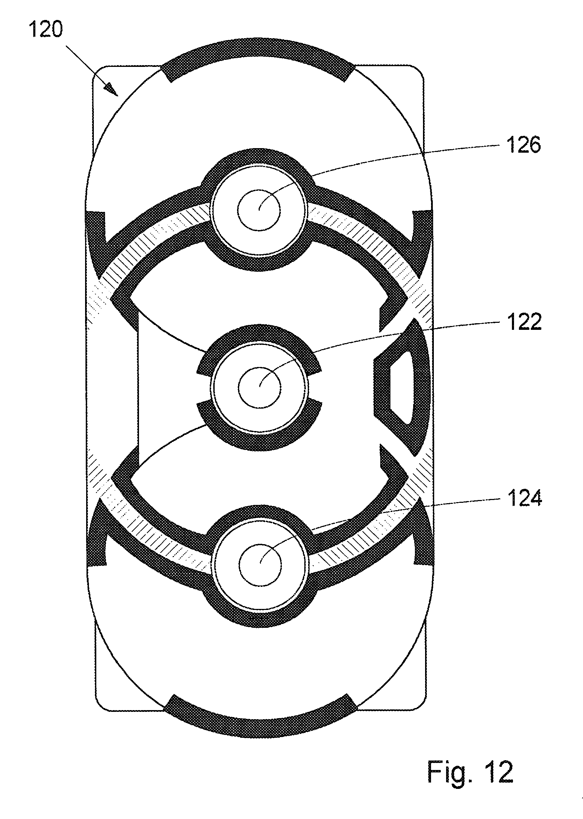

Fig. 12 shows a further embodiment of the locating unit for a double box that permits making of holes for the latter without the need for manual post shaping. The locating unit 120 is having three guiding holes 122, 124, 126. The guiding holes are again arranged in an overlapping manner with regard to each other and to the diameter of the hole saw. In this case the outer guiding holes 124, 126 are positioned almost on the cutting line of the hole saw's cutting tool. Nevertheless, they are arranged such that when the first hole is made, the next guiding hole becomes visible. Depending on the positioning of the guiding magnets, one of the guiding holes 122, 124, 126 is firstly located. Actually, it does not matter which one of the guiding holes it is. For instance, if the guiding magnets are arranged around the central guiding hole 122, both outer guiding holes are visible after making the first hole. Subsequently two further holes are made by means of the two outer guiding holes in order to expose the double box. In case the guiding magnets are arranged around one of the outer guiding holes 124, 126, the central guiding hole is visible after making the first hole. Then making of holes is continued by means of the central guiding hole 122, whereby the other outer guiding hole becomes visible, with which help the exposure of the double box is completed.

Even larger boxes may easily be exposed by means of locating units having further guiding holes, which are arranged in an overlapping manner in relation to each other and the diameter of the hole saw. There is no upper limit. Even the shape of the box does not need to be on a straight line, in the manner as illustrated in the Figs. For instance, also curved shapes are possible.

When using differently sized tools for making holes for the different guiding holes, other variations of the locating tool and shapes of holes are possible, for instance for triangular boxes (one large and one small hole).

Hitherto it has been extremely difficult to position further holes, which overlap with existing holes by topmost half the diameter of a hole saw, with an existing hole in a precise manner in a wall by means of a hole saw. The material has already been removed when making the first hole. Hence, a possible modification of the device comprises omitting the locating part, and to provide a guiding tool for insertion into an existing hole in a wall element. This tool has a circular outer edge, eventually with fastening means in order to withhold the element in the existing hole. In this case the tool has further guiding holes that are not provided in the center of the guiding tool, but offset from this center that is surrounded by the circular outer edge. Such a guiding tool is introduced into an existing hole, slightly displaced from the outside of the wall, and provides making of further holes, which overlap with the existing hole with at most half the diameter of the hole saw, in a precise manner in a wall.

The invention is of course not limited to locating boxes in frame-work walls 1 comprising a frame-work 2 with plate-like wall elements 7, 8, but may be used for locating quite different objects hidden by wall, roof and floor elements or by other building elements. The locating magnet is preferably a permanent magnet but may also be of another type, whereby only one magnetic body can generate a magnetic field while the other is made of a magnetically attractable material. The arrangement of the guiding holes in an overlapping manner in relation to each other and the diameter of the hole saw may also be effected in other geometric placements as those illustrated. In other words, the invention is not limited to the embodiments described and shown in the drawings, but may vary within the scope of the attached patent claims.

## Claims

1. A device (60, 120) for in building facilitating exposure of hidden objects, such as boxes for electrical installations, which are to be exposed by providing a covering building unit (7), such as a plate-like wall, roof or floor unit, with holes, **characterized by**
a plurality of guiding holes (61, 62; 122, 124, 126) for guiding of an exposing drill device (12) having a defined outer diameter, and by
at least one recess (63, 64) arranged concentrically with relation to guiding hole (61, 62) respectively, wherein the recess is shaped as a part of a circle and has a defined depth from the top surface (69) of the device which is adapted to at least partly receive the toothed cutting side of drilling device (12) when it has advanced through the plate-like wall element (7), such that the recess ensures that the toothed cutting side of drilling device (12) does not cut into the top surface (69) of the device, wherein said guiding holes are arranged with a distance to each other that does not substantially exceed half the outer diameter of the recess (63, 64), such that after exposure of a first hole (110) with the exposing drill device (12) at least one further guiding hole is accessible for guiding of further holes.

2. Device according to claim 1, wherein the device further comprises means for locating the precise position of the hidden object (5) that comprises a locating magnet (9) having an array of magnetic bodies (74a-74f), which are arranged in the device (60, 120) at the object on one side of the covering building unit (7), as well as a second magnetic body (9b), which is moveable alongside the other side of the covering building unit (7) in order to detect where the at the object mounted array of magnetic bodies (74a-74f) is located, wherein the array of magnetic bodies (74a-74f) is arranged around one of the guiding holes (61, 62; 122, 124, 126).

3. Device according to claim 1 or 2, wherein at least one of the guiding holes (61, 62; 122, 124, 126) comprises a tapered recess adapted to guide the exposing drill device (12) if this deflects from a predetermined position when the latter reaches one of the guiding holes, wherein the recess preferably is conically tapered.

4. Device according to claim 1, wherein the hidden object is an open box, **characterized in that** the tapered recess is adapted and shaped such that the latter guides a central twist drill (12a) comprised in the exposing drill device (12) to a predetermined position before a drill sleeve (12b) reaches the plate-like wall elements (7) for exposing a part of the box.

5. Device according to any of the preceding claims, wherein the hidden object is an open non-circular box, wherein the device is a coupling element, which is attachable to the box and releasable from the latter after exposure.

6. Device according to claim 5, **characterized in that** the coupling element and the box comprise corresponding snap lock elements for snap locking of the coupling element, wherein the coupling element comprises an array of magnetic bodies (74a-74f) comprising a cover fitting into the box.

7. Device according to claim 2, **characterized in that** the array of magnetic bodies (74a-74f) comprises a plurality of bar formed magnetic bodies.

8. Device according to any of the preceding claims, wherein the guiding holes are separate from the magnetic bodies for locating one of the guiding holes, and preferably formed as inlay bushings of metal.

9. A Method (80) for in building facilitating exposure of hidden objects, such as boxes for electrical installations, which are to be exposed by providing a covering building unit (7), such as a plate-like wall, roof or floor unit, with holes, wherein the method comprises the following steps:
positioning (81) a device according to one of the preceding claims in the hidden object;
installing (83) the covering building unit such that the object is hidden;
making a first hole (110) with a first exposing drill device (12), wherein a first guiding hole (61) is used; and
when the first hole (110) is made, making (87) a second hole that partly overlaps with the first hole (110) with the first or another exposing drill device, wherein a second guiding hole (62) is used, wherein the first exposing drill device (12) having a defined outer diameter, and wherein said guiding holes are arranged with a distance to each other that does not substantially exceed half the outer diameter of the exposing drill device (12), such that after exposure of a first hole (110) with the exposing drill device (12) at least one further guiding hole is accessible for guiding of further holes.

## Patentansprüche

1. Gerät (60, 120), das beim Bauen das Freilegen verdeckter Objekte, wie beispielsweise Boxen für Elektroinstallationen, ermöglicht, die freigelegt werden, indem eine abdeckende Baueinheit (7), wie beispielsweise eine plattenartige Wand-, Dach- oder Bodeneinheit, mit Löchern versehen wird, **gekennzeichnet durch**:
mehrere Führungslöcher (61, 62; 122, 124, 126) zum Führen eines freilegenden Bohrgeräts (12) mit einem definierten Außendurchmesser, und **durch**
mindestens einen Rücksprung (63, 64), der im Verhältnis zum jeweiligen Führungsloch (61, 62) konzentrisch angeordnet ist, wobei der Rücksprung als ein Teil eines Kreises ausgebildet ist und eine definierte Tiefe von der oberen Oberfläche (69) des Geräts aufweist, die so ausgebildet ist, dass sie mindestens teilweise die gezahnte Schnittseite des Bohrgeräts (12) aufnehmen kann, wenn sich diese **durch** das plattenartige Wandelement (7) vorgearbeitet hat, so dass **durch** den Rücksprung sichergestellt ist, dass die gezahnte Schnittseite des Bohrgeräts (12) nicht in die obere Oberfläche (69) des Gerätes einschneidet, wobei die Führungslöcher mit einer Distanz zueinander angeordnet sind, die im Wesentlichen nicht größer als die Hälfte des Außendurchmessers des Rücksprungs (63, 64) ist, so dass nach erfolgtem Freilegen eines ersten Lochs (110) mit dem freilegenden Bohrgerät (12) mindestens ein weiteres Führungsloch zum Führen weiterer Löcher zugänglich ist.

2. Gerät nach Anspruch 1, wobei das Gerät weiterhin ein Mittel zum Lokalisieren der präzisen Position des verdeckten Objekts (5) umfasst, das einen lokalisierenden Magnet (9) mit einer Anordnung von Magnetkörpern (74a - 74f), die im Gerät (60, 120) am Objekt auf einer Seite der abdeckenden Baueinheit (7) angeordnet sind, sowie einen zweiten Magnetkörper (9b) umfasst, der entlang der anderen Seite der abdeckenden Baueinheit (7) bewegbar ist, um zu bestimmen, wo sich die am Objekt montierte Anordnung von Magnetkörpern (74a - 74f) befindet, wobei die Anordnung von Magnetkörpern (74a - 74f) um eines der Führungslöcher (61, 62; 122, 124, 126) herum angeordnet ist.

3. Gerät nach Anspruch 1 oder 2, bei dem mindestens eines der Führungslöcher (61, 62; 122, 124, 126) einen kegelförmigen Rücksprung umfasst, der so ausgebildet ist, dass er das freilegende Bohrgerät (12) führt, falls dieses von einer vorbestimmten Position abweicht, wenn das Letztere eines der Führungslöcher erreicht, wobei der Rücksprung vorzugsweise konisch ausgebildet ist.

4. Gerät nach Anspruch 1, bei dem das verdeckte Objekt eine offene Box ist, **dadurch gekennzeichnet, dass** der konisch ausgeführte Rücksprung so ausgebildet und geformt ist, dass der Letztere einen zentralen Spiralbohrer (12a), der im freilegenden Bohrgerät (12) enthalten ist, zu einer vorbestimmten Position führt, bevor eine Bohrhülse (12b) die plattenartigen Wandelemente (7) erreicht, um einen Teil der Box freizulegen.

5. Gerät nach einem der vorstehend aufgeführten Ansprüche, bei dem das verdeckte Objekt eine offene, nicht kreisförmige Box ist, wobei das Gerät ein Kopplungselement ist, das an der Box gesichert und nach erfolgter Freilegung wieder davon gelöst werden kann.

6. Gerät nach Anspruch 5, **dadurch gekennzeichnet, dass** das Kopplungselement und die Box entsprechende Schnappverriegelungselemente umfasst, um das Kopplungselement in eine Schnappverriegelung zu bringen, wobei das Kopplungselement eine Anordnung von Magnetkörpern (74a - 74f) mit einer in die Box passenden Abdeckung umfasst.

7. Gerät nach Anspruch 2, **dadurch gekennzeichnet, dass** die Anordnung von Magnetkörpern (74a - 74f) mehrere stangenförmige Magnetkörper umfasst.

8. Gerät nach einem der vorstehend aufgeführten Ansprüche, bei dem die Führungslöcher von den Magnetkörpern getrennt sind, um eines der Führungslöcher zu lokalisieren, wobei diese vorzugsweise als Inlaybuchsen aus Metall ausgebildet sind.

9. Verfahren (80), das beim Bauen das Freilegen verdeckter Objekte, wie beispielsweise Boxen für Elektroinstallationen, ermöglicht, die freigelegt werden, indem eine abdeckende Baueinheit (7), wie beispielsweise eine plattenartige Wand-, Dach- oder Bodeneinheit, mit Löchern versehen wird, wobei das Verfahren die nachfolgenden Schritte umfasst:
Positionieren (81) eines Geräts nach einem der vorstehend aufgeführten Ansprüche im abgedeckten Objekt;
Einbauen (83) der abdeckenden Baueinheit, so dass das Objekt abgedeckt ist;
Erstellen eines ersten Lochs (110) mit einem ersten freilegenden Bohrgerät (12), wobei ein erstes Führungsloch (61) verwendet wird; und,
nachdem das erste Loch (110) erstellt wurde, Erstellen (87) eines zweiten Lochs, das teilweise das erste Loch (110) überlappt, mittels des ersten oder eines anderen freilegenden Bohrgeräts, wobei ein zweites Führungsloch (62) verwendet wird, wobei das erste freilegende Bohrgerät (12) einen definierten Außendurchmesser hat, und wobei die Führungslöcher zueinander mit einer Distanz angeordnet sind, die nicht wesentlich größer als die Hälfte des Außendurchmessers des freilegenden Bohrgeräts (12) ist, so dass nach erfolgtem Freilegen eines ersten Lochs (110) mit dem freilegenden Bohrgerät (12) mindestens ein weiteres Führungsloch zum Führen weiterer Löcher zugänglich ist.

## Revendications

1. Dispositif (60, 120) pour, dans un bâtiment, faciliter l'exposition d'objets cachés, tels que des boîtiers pour des installations électriques, qui doivent être exposés en prévoyant dans une unité de bâtiment de recouvrement (7), telle qu'une unité de paroi, de toit ou de sol similaire à une plaque, des trous, **caractérisé par**
une pluralité de trous de guidage (61, 62 ; 122, 124, 126) pour guider un dispositif de perçage d'exposition (12) ayant un diamètre extérieur défini, et par
au moins un évidement (63, 64) agencé de manière concentrique par rapport au trou de guidage (61, 62) respectivement, dans lequel l'évidement est formé en tant que partie d'un cercle et a une profondeur définie par rapport à la surface supérieure (69) du dispositif qui est conçu pour recevoir au moins partiellement le côté de découpe denté du dispositif de perçage (12) lorsqu'il a avancé à travers l'élément de paroi similaire à une plaque (7), de sorte que l'évidement garantisse que le côté de découpe denté du dispositif de perçage (12) ne découpe pas la surface supérieure (69) du dispositif, dans lequel lesdits trous de guidage sont agencés à une distance les uns des autres qui ne dépasse pas sensiblement une moitié du diamètre extérieur de l'évidement (63, 64), de sorte que, après l'exposition d'un premier trou (110) par le dispositif de perçage d'exposition (12), au moins un autre trou de guidage soit accessible pour le guidage d'autres trous.

2. Dispositif selon la revendication 1, dans lequel le dispositif comprend en outre des moyens pour localiser la position précise de l'objet caché (5) qui comprend un aimant de localisation (9) comportant un réseau de corps magnétiques (74a à 74f), qui sont agencés dans le dispositif (60, 120) au niveau de l'objet d'un côté de l'unité de bâtiment de recouvrement (7), ainsi qu'un deuxième corps magnétique (9b), qui est mobile le long de l'autre côté de l'unité de bâtiment de recouvrement (7) afin de détecter où l'ensemble de corps magnétiques (74a à 74f) monté au niveau de l'objet est situé, dans lequel l'ensemble de corps magnétiques (74a à 74f) est agencé autour de l'un des trous de guidage (61, 62 ; 122, 124, 126).

3. Dispositif selon la revendication 1 ou 2, dans lequel au moins l'un des trous de guidage (61, 62 ; 122, 124, 126) comprend un évidement effilé conçu pour guider le dispositif de perçage d'exposition (12) si celui-ci s'écarte d'une position prédéterminée lorsque ce dernier atteint l'un des trous de guidage, dans lequel l'évidement est de préférence effilé de manière conique.

4. Dispositif selon la revendication 1, dans lequel l'objet caché est une boîtier ouvert, **caractérisé en ce que** l'évidement effilé est conçu et formé de sorte que ce dernier guide un foret hélicoïdal central (12a) compris dans le dispositif de perçage d'exposition (12) à une position prédéterminée avant qu'une douille de perçage (12b) atteigne les éléments de paroi similaires à une plaque (7) pour exposer une partie du boîtier.

5. Dispositif selon l'une quelconque des revendications précédentes, dans lequel l'objet caché est un boîtier non circulaire ouvert, dans lequel le dispositif est un élément d'accouplement, qui peut être fixé au boîtier et séparé de ce dernier après une exposition.

6. Dispositif selon la revendication 5, **caractérisé en ce que** l'élément d'accouplement et le boîtier comprennent des éléments de verrouillage à encliquetage correspondants pour verrouiller par encliquetage l'élément d'accouplement, dans lequel l'élément d'accouplement comprend un réseau de corps magnétiques (74a à 74f) comprenant un capot s'insérant dans le boîtier.

7. Dispositif selon la revendication 2, **caractérisé en ce que** l'ensemble de corps magnétiques (74a à 74f) comprend une pluralité de corps magnétiques en forme de barres.

8. Dispositif selon l'une quelconque des revendications précédentes, dans lequel les trous de guidage sont séparés des corps magnétiques pour localiser l'un des trous de guidage, et formés de préférence en tant que douilles incrustées de métal.

9. Procédé (80) pour, dans un bâtiment, faciliter l'exposition d'objets cachés, tels que des boîtiers pour des installations électriques, qui doivent être exposés en prévoyant dans une unité de bâtiment de recouvrement (7), telle qu'une unité de paroi, de toit ou de sol similaire à une plaque, des trous, dans lequel le procédé comprend les étapes suivantes :
de positionnement (81) d'un dispositif selon l'une des revendications précédentes dans l'objet caché ;
d'installation (83) de l'unité de bâtiment de recouvrement de sorte que l'objet soit caché ;
de réalisation d'un premier trou (110) par un premier dispositif de perçage d'exposition (12), dans lequel un premier trou de guidage (61) est utilisé ; et
lorsque le premier trou (110) est réalisé, de réalisation (87) d'un deuxième trou qui recouvre partiellement le premier trou (110) par le premier ou un autre dispositif de perçage d'exposition, dans lequel un deuxième trou de guidage (62) est utilisé, dans lequel le premier dispositif de perçage d'exposition (12) a un diamètre extérieur défini, et dans lequel lesdits trous de guidage sont agencés à une distance les uns des autres qui ne dépasse pas sensiblement une moitié du diamètre extérieur du dispositif de perçage d'exposition (12), de sorte qu'après l'exposition d'un premier trou (110) par le dispositif de perçage d'exposition (12), au moins un autre trou de guidage soit accessible pour le guidage d'autres trous.
